# EUROPEAN PATENT SPECIFICATION

(11) **EP 3 211 701 B1**
(45) Date of publication and mention of the grant of the patent: **09.05.2018**
(21) Application number: 16204957.1
(22) Date of filing: 19.12.2016
(51) Int. Cl.: H01M 8/0438, H01M 8/04664, H01M 8/04828, H01M 8/0612, H01M 8/04291, H01M 8/04746

(54) **FUEL CELL SYSTEM**
BRENNSTOFFZELLENSYSTEM
SYSTÈME DE PILE À COMBUSTIBLE

(30) Priority: 29.02.2016 JP 2016036937
(43) Date of publication of application: 30.08.2017
(73) Proprietor: AISIN SEIKI KABUSHIKI KAISHA, Aichi 448-8650 (JP)
(72) Inventor: TANIGUCHI, Hiroya, Kariya-shi, Aichi 448-8650 (JP); OKAWARA, Hiroki, Kariya-shi, Aichi 448-8650 (JP)
(74) Representative: TBK

(56) References cited:
- EP-A1- 2 530 775
- EP-A1- 2 551 947
- US-A1- 2010 291 451

## Description

### TECHNICAL FIELD

This disclosure generally relates to a fuel cell system.

### BACKGROUND DISCUSSION

A known fuel cell system includes auxiliary devices, for example, a fan, a pump, a heater, a flow sensor, a temperature sensor, and a water level sensor. Each of the sensors detects whether the fuel cell system operates normally, and if the fuel cell system operates abnormally, the fuel cell system stops operating. When the fuel cell system stops operating, it takes a comparatively long time until the fuel cell system restarts the power generating operation, thereby decreasing the usability of a user.

Meanwhile, according to a fuel cell system disclosed in WO2012132410A (hereinafter referred to as Patent reference 1), as shown in Fig. 2 of Patent reference 1, in a case where each of sensors operates abnormally, the fuel cell system stops operating regardless of whether auxiliary devices other than the sensors operate normally or abnormally. On the other hand, when each of the sensors operates normally, the fuel cell system continues operation regardless of whether the auxiliary devices other than the sensors operate normally or abnormally. Accordingly, because the fuel cell system is inhibited from stopping the operation at a case where the auxiliary devices other than the sensors operate abnormally, the usability of the fuel cell system for the user is prevented from being decreased. Further prior art may be found in EP 2530775 A1 describing a fuel cell system comprising an additional sensor malfunction determination device, a state error determination device, and a storage device, in EP 2551947 A1 describing a fuel cell system comprising an additional alert portion making an alert in a case where a state determined by a state determination portion indicates an error, and in US 2010-0291451 A1 describing a fuel cell system, comprising a control device performing control such that the fuel cell after abnormal shut-down of power generation is cooled with a higher rate in an shut-down process than in a normal shut-down process.

However, according to the fuel cell system disclosed in Patent reference 1, even in a case where the flow sensor detecting the flow amount of fuel or cathode gas temporarily operates abnormally, or where a communication between the flow sensor and a control device temporarily operates abnormally, the fuel cell system stops operating.

A need thus exists for a fuel cell system that may be inhibited from stopping an operation even in a case where an abnormality of a flow sensor or an abnormal communication between the flow sensor and a control device is detected.

### SUMMARY

The present invention in its first aspect provides a fuel cell system as specified in claim 1.

Accordingly, in case of determining that at least one of the abnormality of the sensor and the communication abnormality occurs, the control device performs the reset process reconnecting the switch after disconnecting. As a result, the target flow sensor and the communication between the target flow sensor and the control device may reset normally. Thus, even in a case where the abnormality of the first and second flow sensors, or the communication abnormality between the first and second flow sensor and the control device occurs, the fuel cell system is inhibited from stopping the operation.

Further according to this aspect of the invention, when the target flow sensor and the communication between the target flow sensor and the control device are determined to reset normally, the control device may control the driving amounts of the source material pump and of the cathode air blower based on the flow amount detected by the first and second flow sensors from and after the time point of the normal reset. Thus, even in a case where at least one of the abnormality of the sensor and the communication abnormality occurs, the control device may continue the operation of the fuel cell system without stopping when the target flow sensor and the communication between the target flow sensor and the control device are determined to reset normally after the reset process is performed.

The present invention in its second aspect provides a fuel cell system as specified in claim 2.

Accordingly, the driving amount of the target pump is maintained to that of when the abnormality is determined. Accordingly, the generated electric power of the fuel cell when the abnormality is determined may be maintained, from when the abnormality is determined, during the reset process, and to the time point of the normal reset resetting the target flow sensor and the communication between the target flow sensor and the control device normally.

The present invention in its third aspect provides a fuel cell system as specified in claim 3.

Accordingly, the generated electric power of the fuel cell is maintained, from when the abnormality is determined, to that of when the abnormality is determined. As a result, when the fuel cell system operates the power generating operation (the load following operation), the generated electric power of the fuel cell is maintained at a constant value even the load power consumption varies from when the abnormality is determined, during the reset process, and to the time point of normal reset. Thus, in a state where the control device cannot detect the flow amount of the fluid due to the abnormality of the sensor or the communication abnormality, the control device may inhibit the supply amount of the fluid from excessing and lacking due to the control of the driving amounts of the source material pump, of the cathode air blower, and of the reforming water pump in response to the load power consumption.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view illustrating an embodiment of a fuel cell system disclosed here;
Fig. 2 is a view illustrating a relationship between an electric power converter and auxiliary devices shown in Fig. 1;
Fig. 3 is a block diagram of the fuel cell system shown in Fig. 1;
Fig. 4 is a flowchart being operated by a control device shown in Fig. 3;
Fig. 5 is a time chart illustrating an operation of the fuel cell that is in an activating operation based on a flowchart in Fig. 4; and
Fig. 6 is a time chart illustrating the operation of the fuel cell that is in a power generating operation based on the flowchart in Fig. 4.

### DETAILED DESCRIPTION

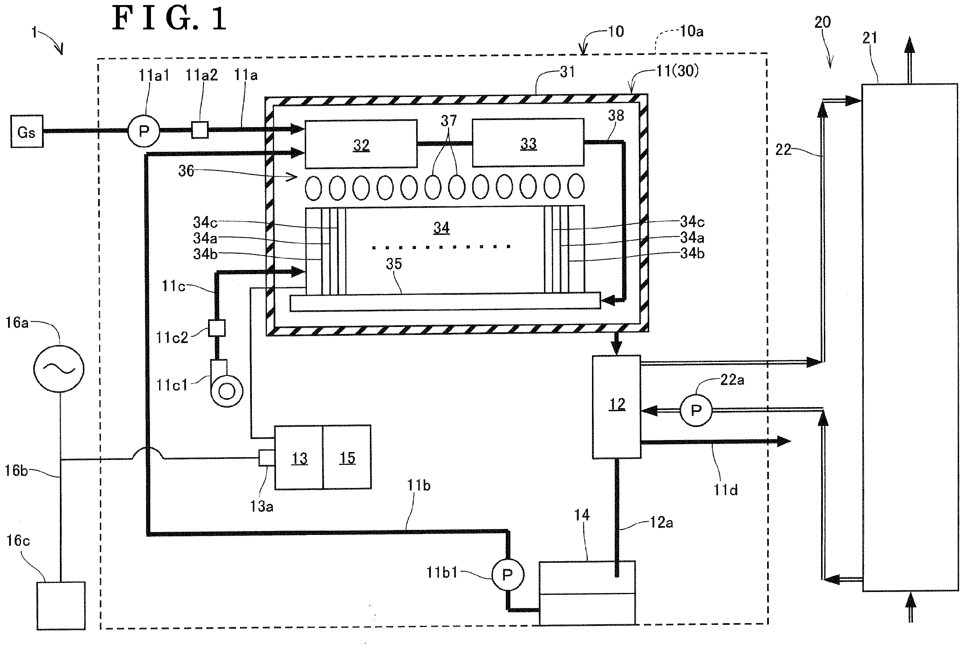

A fuel cell system of an embodiment will hereunder be explained with reference to the drawings. As shown in Fig. 1, a fuel cell system 1 includes a power generation unit 10 and a hot-water storage tank 21. The power generation unit 10 includes a body 10a, a fuel cell module 11, a heat converter 12, an electric power converter 13, a water tank 14, and a control device 15.

The fuel cell module 11 (30) includes a casing 31, an evaporation portion 32, a reforming portion 33, and a fuel cell 34. The casing 31 is made from an insulating material and is formed in a box shape. A source material supply pipe for reforming 11a includes one end that is connected to a supply source Gs to supply a source material (a source material for reforming), and the other end that is connected to the evaporation portion 32. The supply source Gs corresponds to a gas supply pipe of, for example, city gas, and a gas cylinder of liquefied petroleum gas, or LP gas. The source material supply pipe for reforming 11a includes a source material pump 11a1 (i.e., serving as a first pump) and a first flow sensor 11a2. The source material pump 11a1 corresponds to a pump sending the source material. The first flow sensor 11a2 detects a flow amount of the source material (a flow amount per unit time). The flow amount detected by the first flow sensor 11a2 is outputted to the control device 15.

A cathode air supply pipe 11c includes one end that is connected to a cathode air blower 11c1 (i.e., serving as a second pump) to supply a cathode air serving as a cathode gas to the casing 31, and the other end that is connected to the fuel cell module 30. The cathode air blower 11c1 corresponds to a pump sending a cathode air. The cathode air supply pipe 11c includes a second flow sensor 11c2 detecting the flow amount of the cathode air (a flow amount per unit time). The flow amount detected by the second flow sensor 11c2 is outputted to the control unit 15.

A water supply pipe 11b supplying reforming water includes one end (a lower end) that is connected to the water tank 14, and the other end that is connected to the evaporation portion 32. The water supply pipe 11b includes a reforming water pump 11b1 (i.e., serving as a third pump) sending the reforming water.

The evaporation portion 32 generates a water vapor from the reforming water supplied from the water tank 14. In particular, the evaporation portion 32 generates the water vapor by being heated by combustion gas and by evaporating the supplied reforming water. The evaporation portion 32 preheats the supplied source material. The evaporation portion 32 mixes the generated water vapor and the preheated source material and supplies the mixed material to the reforming portion 33. The source material corresponds to gaseous fuel for reforming such as natural gas and LP gas, and liquid fuel for reforming such as kerosene, gasoline and methanol, for example. In the present embodiment, the source material corresponds to the natural gas.

The reforming portion 33 generates the reformed gas from the source material supplied from the supply source Gs and from the water vapor supplied from the evaporation portion 32 and supplies the reformed gas to the fuel cell 34. Specifically, the reforming portion 33 generates the reformed gas from mixed gas (the source material, the water vapor) supplied from the evaporation portion 32 by being heated by the combustion gas and by being supplied with the heat required for a water vapor reforming reaction, and discharges the reformed gas. The inside of the reforming portion 33 is filled with a catalyst, for example, Ru catalyst or a Ni catalyst. The mixed gas reacts by means of the catalyst so as to be reformed, thereby generating gas including hydrogen gas and carbon monoxide gas (so-called, the water vapor reforming reaction). The reformed gas includes hydrogen, carbon monoxide, carbon dioxide, water vapor, natural gas (methane gas) that is not reformed, and the reforming water (the water vapor) not used for reforming. The water vapor reforming reaction corresponds to an endothermic reaction.

The fuel cell 34 is supplied with the fuel and the cathode gas, and generates electric power from the fuel and the cathode gas. The fuel corresponds to the reformed gas. The fuel cell 34 includes plural cells 34a that are stacked with one another. Each of the plural cells 34a includes a fuel electrode, an air electrode (oxidant pole), and an electrolyte that is disposed between the fuel electrode and the air electrode. The fuel cell 34 of the embodiment corresponds to the solid oxide fuel cell, and uses a zirconium oxide serving as a type of the solid oxide as the electrolyte. The reformed gas (hydrogen, carbon monoxide and methane gas) is supplied to the fuel electrode of the fuel cell 34 as fuel. The cell 34a includes a first side that is adjacent to the fuel electrode and a second side that is adjacent to the air electrode. The first side of the cell 34a is provided with a fuel flow passage 34b sending the fuel (the reformed gas). The second side of the cell 34a is provided with an air flow passage 34c sending air (cathode air) serving as cathode gas.

The fuel cell 34 is disposed on a manifold 35. The reformed gas sent from the reforming portion 33 is supplied to the manifold 35 via a reformed gas supply pipe 38. The fuel flow passage 34b includes a lower end (a first end) that is connected to a fuel outlet of the manifold 35. The reformed gas discharged from the fuel outlet is sent from a lower end of the fuel flow passage 34b and is discharged from an upper end (a second end) of the fuel flow passage 34b. The cathode air sent by the cathode air blower 11c1 is supplied to the fuel cell 34 via the cathode air supply pipe 11c. The cathode air is sent from a lower end of the air flow passage 34c and is discharged from an upper end of the air flow passage 34c.

A combustion portion 36 is provided between the fuel cell 34 and a set of the evaporation portion 32 and the reforming portion 33. The combustion portion 36 generates combustion gas (a flame 37) combusting anode off-gas (fuel off gas) and cathode off-gas sent from the fuel cell 34. The combustion gas heats the evaporation portion 32 and the reforming portion 33. The combustion portion 36 generates flue gas by combusting the anode off-gas. The combustion portion 36 sets a temperature level within the fuel cell module 11 to an operation temperature level of the fuel cell 34.

A heat exchanger 12 is supplied with the flue gas exhausted from the fuel cell module 30, and is supplied with stored hot water sent from the hot-water storage tank 21. The heat exchanger 12 exchanges heat between the flue gas and the stored hot water. In particular, the hot water storage tank 21 stores the hot water and is connected to a stored hot water circulation line 22 circulating the stored hot water (circulates in a direction shown in arrows in Fig. 1). A stored hot water circulation pump 22a and the heat exchanger 12 are disposed on the stored hot water circulation line 22 in the aforementioned order from a lower end to an upper end of the hot-water storage tank 21. The heat exchanger 12 is connected to (is penetrated with) an exhaust pipe 11d that is extended from the fuel cell module 30. An end of a condensed water supply pipe 12a is connected to the heat exchanger 12.

In the heat exchanger 12, the flue gas sent from the fuel cell module 30 is introduced to the heat exchanger 12 through the exhaust pipe 11d, and is cooled by exchanging heat with the stored hot water. At the same time, the water vapor within the flue gas is condensed. The flue gas after being cooled is discharged to an outer side via the exhaust pipe 11d. The condensed water is supplied to the water tank 14 via the condensed water supply pipe 12a. The water tank 14 purifies the condensed water by ion exchange resin, and stores the purified water as the reforming water.

An exhaust heat collection system 20 is provided with the heat exchanger 12, the stored hot water tank 21, and the stored hot water circulation line 22. The exhaust heat collection system 20 collects and stores exhaust heat of the fuel cell module 30 in the stored hot water.

An electric power converter 13 (i.e., serving as an electric power supply) inputs a direct current voltage, or a DC voltage outputted from the fuel cell 34 and converts the DC current to a predetermined alternating current voltage, or a predetermined AC voltage, and outputs the AC voltage to a first electric power supply line 16b that is connected to an AC system electric power supply 16a and a load device 16c (for example, an electric appliance).

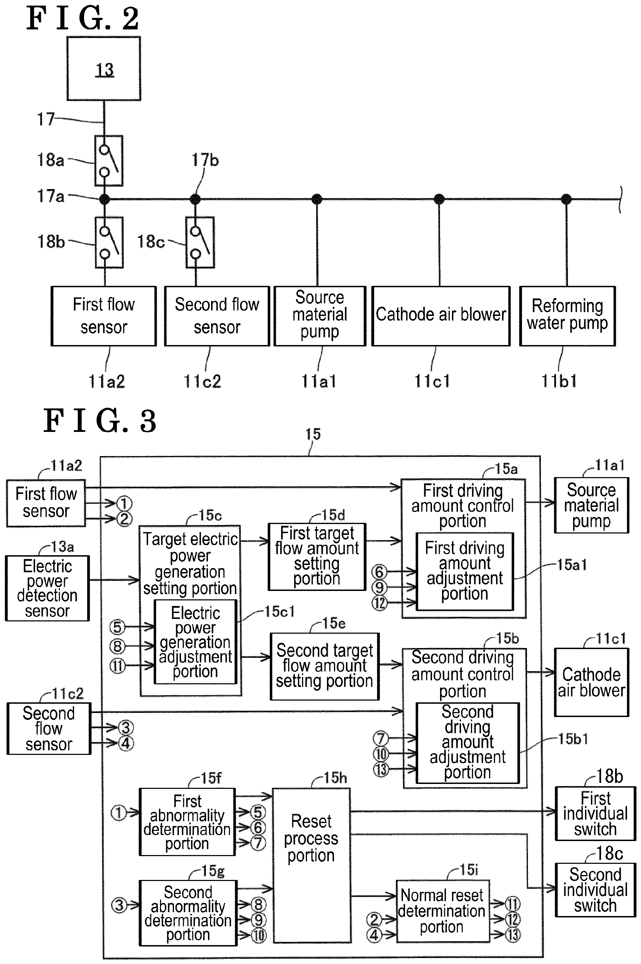

The electric power converter 13 inputs the AC voltage sent from the system electric power supply 16a via the first electric power supply line 16b, converts the AC voltage into a predetermined DC voltage, and outputs the DC voltage to the auxiliary devices and to the control device 15 (an internal load) via a second electric power supply line 17 (see Fig. 2). The auxiliary devices correspond to the source material pump 11a1, the cathode air blower 11c1, the reforming water pump 11b1, and the first and second flow sensors 11a2, 11c2.

As shown in Fig. 2, the second electric power supply line 17 connects the electric power converter 13 to the auxiliary devices via plural junctions. A first junction 17a, a second junction 17b and other junctions serving as the plural junctions are provided in the aforementioned order from the electric power converter 13 along the second electric power supply line 17. The electric power converter 13 and the first flow sensor 11a2 are electrically connected with each other via the first junction 17a. The electric power converter 13 and the second flow sensor 11c2 are electrically connected with each other via the second junction 17b. The second electric power supply line 17 includes an entire switch 18a, a first individual switch 18b (i.e., serving as a switch), and a second individual switch 18c (i.e., serving as a switch). The first and second individual switches 18b, 18c each corresponds to a switch in the disclosure.

Each of the entire switch 18a, the first individual switch 18b, and the second individual switch 18c corresponds to the switch that closes (electrically connects) the second electric power supply line 17 when being connected, and opens (electrically disconnects) the second electric power supply line 17 when being disconnected. Specifically, the entire switch 18a is provided between the electric power converter 13 and the first junction 17a that are provided on the second electric power supply line 17, and electrically connects/disconnects the electric power converter 13 to/from all of the auxiliary devices. In particular, the first individual switch 18b is provided between the first junction 17a and the first flow sensor 11a2 that are provided on the second electric power supply line 17, and electrically connects/disconnects the electric power converter 13 to/from the first flow sensor 11a2. In particular, the second individual switch 18c is provided between the second junction 17b and the second flow sensor 11c2 that are provided on the second electric power supply line 17, and electrically connects/disconnects the electric power converter 13 to/from the second flow sensor 11c2. The entire switch 18a, the first individual switch 18b, and the second individual switch 18c open and close in accordance with control commands sent from the control device 15 (connection/disconnection control). When the electric power supply of the fuel cell system 1 is on, the entire switch 18a is in a closed state (in an electrically connected state) with the second electric power supply line 17. On the other hand, when the electric power supply of the fuel cell system 1 is off, the entire switch 18a is in an open state (in an electrically disconnected state) with the second electric power supply line 17. When the electric power supply of the fuel cell system 1 is on, each of the first and second individual switches 18b, 18c is in the closed state (in the electrically connected state) with the second electric power supply line 17 except when a reset process, or a return process is performed.

The electric power converter 13 includes an electric power detection sensor 13a (see Fig. 1) detecting generated electric power serving as an electric power outputted from the fuel cell 34. The electric power detection sensor 13a corresponds to, for example, a wattmeter. The generated electric power detected by the electric power detection sensor 13a is outputted to the control device 15. Alternatively, instead of the electric power detection sensor 13a, at least one of a current detection sensor and a voltage detection sensor may be provided.

The control device 15 controls the operation of the fuel cell system 1 by driving the auxiliary devices. As shown in Fig. 3, the control device 15 includes a first driving amount control portion 15a, a second driving amount control portion 15b, a third driving amount control portion, a target electric power generation setting portion 15c, a first target flow amount setting portion 15d, a second target flow amount setting portion 15e, a first abnormality determination portion 15f (i.e., serving as an abnormality determination portion), a second abnormality determination portion 15g (i.e., serving as an abnormality determination portion), a reset process portion 15h, and a normal reset determination portion 15i. The first and second abnormality determination portion 15f, 15g corresponds to an abnormality determination portion. The control portion 15 further includes a memory portion. The memory portion memorizes a map and a program. The memory portion further memorizes a time when a reset process is performed for a first predetermined number of times.

The first driving amount control portion 15a operates a feedback control of the driving mount of the source material pump 11a1 so that the flow amount detected by the first flow sensor 11a2 comes to be a first target flow amount Qt1. The first target flow amount Qt1 is set by the first target flow amount setting portion 15d. Because the source material pump 11a1 is pulse width modulation-controlled, or PWM-controlled, a first control command value S1 outputted to the source material pump 11a1 by the first driving amount control portion 15a is calculated from the duty ratio of the PWM control. The first driving amount control portion 15a includes a first driving amount adjustment portion 15a1 (i.e., serving as a driving amount adjustment portion).

The second driving amount control portion 15b operates a feedback control of the driving amount of the cathode air blower 11c1 so that the flow amount detected by the second flow sensor 11c2 comes to be a second target flow amount Qt2. The second target flow amount Qt2 is set by the second target flow amount setting portion 15e. Because the cathode air blower 11c1 is PWM-controlled, a second control command value S2 outputted to the cathode air blower 11c1 by the second driving amount control portion 15b is calculated from the duty ratio of the PWM control. The second driving amount control portion 15b includes a second driving amount adjustment portion 15b1 (i.e., serving as a driving amount adjustment portion).

The third driving amount control portion controls the driving amount of the reforming water pump 11b1. Specifically, the third driving amount control portion delivers a third control command value corresponding to the driving amount of the reforming water pump 11b1 from a target generated electric power Wt set by the target electric power generation setting portion 15c, and outputs the third control command value to the reforming water pump 11b1 based on a first map. The first map shows a correlation between the target generated electric power Wt and the driving amount of the reforming water pump 11b1.

The target electric power generation setting portion 15c sets the target generated electric power Wt serving as a generated electric power W in which the fuel cell 34 generates in response to the generated electric power detected by the electric power detection sensor 13a. The setting method of the target generated electric power Wt varies in response to the operation of the fuel cell system 1. During the power generating operation of the fuel cell system 1, the generated electric power W of the fuel cell 34 follows so as to be a load power consumption Wl serving as an electric power consumption of the load device 16c (a load following operation). Accordingly, when the fuel cell system 1 is generating power, the target electric power generation setting portion 15c sets the generated electric power detected by the electric power detection sensor 13a to the target generated electric power Wt. When the load power consumption Wl increases higher than the generated electric power W of the fuel cell 34, the underpower is covered by receiving the electric power from the system power supply 16a.

Meanwhile, when the fuel cell system 1 activates or stops operation, the generated electric power W of the fuel cell 34 is controlled so as to be a predetermined generated electric power (a sequence control). When the fuel cell system 1 activates or is shut down, the target electric power generation setting portion 15c sets the target generated electric power Wt to the predetermined generated electric power. The target electric power generation setting portion 15c includes an electric power generation adjustment portion 15c1. The target electric power generation setting portion 15c outputs the target generated electric power Wt to the target flow amount setting portion 15d, 15e and the third driving amount control portion.

The first target flow amount setting portion 15d sets the first target flow amount Qt1. In particular, the first target flow amount setting portion 15d sets the first target flow amount Qt1 from the target generated electric power Wt set by the target electric power generation setting portion 15c based on a second map. The second map shows a correlation between the target generated electric power Wt and the first target flow amount Qt1. The first target flow amount setting portion 15d outputs the first target flow amount Qt1 to the first driving amount control portion 15a.

The second target flow amount setting portion 15e sets the second target flow amount Qt2. In particular, the second target flow amount setting portion 15e sets the second target flow amount Qt2 from the target generated electric power Wt set by the target electric power generation setting portion 15c based on a third map. The third map shows a correlation between the target generated electric power Wt and the second target flow amount Qt2. The second target flow amount setting portion 15e outputs the second target flow amount Qt2 to the second driving amount control portion 15b. The first, second and third maps are measured by, for example, experiments, and are outputted.

The first and second abnormality determination portion 15f, 15g determines whether at least one of the abnormality of the sensor and the abnormality of the communication occurs. The abnormality of the sensor corresponds to a response abnormality of the first and second flow sensor 11a2, 11c2 that does not respond normally (for example, freeze). The first and second flow sensor 11a2, 11c2 having this kind of the abnormality of the sensor outputs a constant value (a value when the abnormality occurs). In a case where the flow amount detected by the first and second flow sensor 11a2, 11c2 has been continuously a constant value for a first time T1 (for example, 200 milliseconds), the abnormality of the first and second flow sensor 11a2, 11c2 is determined.

The communication abnormality corresponds to a communication abnormality between the first flow sensor 11a2 and the control device 15, and a communication abnormality between the second flow sensor 11c2 and the control device 15. Similarly to the abnormality of the sensor, the communication abnormality is determined to occur when the detected flow amount (the output value of the first and second flow sensor 11a2, 11c2) detected by the first and second flow sensor 11a2, 11c2 comes to be a constant value, or when a cycle redundancy check amount, or a CRC amount has been constantly inconsistent for a second predetermined times (for example, ten times) by a CRC test serving as one of error detection systems of data transmission.

On the other hand, in a case where the flow amount detected by the first and second flow sensor 11a2, 11c2 changes within a predetermined range, the first and second abnormality determination portion 15f, 15g determines that the first and second flow sensor 11a2, 11c2 operates normally. The predetermined range is set, based on a flow amount between an upper limit and a lower limit of one of the source material for reforming and cathode air, in accordance with the first and second flow sensor 11a2, 11c2. The first abnormality determination portion 15f determines whether at least one of the abnormality of the sensor and the communication abnormality occurs on a basis of the flow amount (the output value of the first flow sensor 11a2) detected by the first flow sensor 11a2. The second abnormality determination portion 15g determines whether at least one of the abnormality of the sensor and the communication abnormality occurs on a basis of the flow amount (the output value of the second flow sensor 11c2) detected by the second flow sensor 11c2. The first and second abnormality determination portion 15f, 15g outputs a determination result to the first and second driving amount adjustment portion 15a1, 15b1, the electric power generation adjustment portion 15c1, and the reset process portion 15h.

The reset process portion 15h operates the reset process when at least one of the first and second abnormality determination portions 15f, 15g determines that at least one of the abnormality of the sensor and the communication abnormality occurs. The reset process is operated such that the reset process portion 15h reconnects a target switch after disconnecting the target switch. In the reset process, the reset process portion 15h disconnects the target switch for a second time T2 (for example, 500 milliseconds). The target switch corresponds to the first and second individual switch 18b, 18c that electrically connects and disconnects the flow sensor and the electric power converter 13. A target flow sensor corresponds to the first and second flow sensor 11a2, 11c2 in which at least one of the abnormality of the sensor and the communication abnormality occurs. For example, in a case where the first abnormality determination portion 15f determines that the abnormality occurs at the first flow sensor 11a2, the reset process portion 15h operates the reset process to the first individual switch 18b because the first flow sensor 11a2 corresponds to the target flow sensor and the first individual switch 18b corresponds to the target switch. When the reset process is finished, the reset process portion 15h outputs signals that indicate that the reset process is finished to the normal reset determination portion 15i.

The normal reset determination portion 15i determines whether the target flow sensor, and the communication between the target flow sensor and the control device 15, are normally reset, or returned, based on the flow amount (the output value of the target flow sensor) detected by the target flow sensor, after the reset process portion 15h operates the reset process. The normal reset determination portion 15i inputs the output values of the first and second flow sensor 11a2, 11c2. In a case where the output value of the target flow sensor has continuously changed for a third time T3 (for example, one second) within a predetermined range from when the signals indicating that the reset process is finished are inputted to the normal reset determination portion 15i, the abnormality of the sensor or the communication abnormality is cancelled, and the normal reset determination portion 15i determines that the target flow sensor, and the communication between the target flow sensor and the control device 15, are normally reset. In a case where the target flow sensor, and the communication between the target flow sensor and the control device 15, are normally reset, the normal reset determination portion 15i outputs the signals indicating the normal reset to the first and second driving amount adjustment portion 15a1, 15b1 and to the electric power generation adjustment portion 15c1.

The first driving amount adjustment portion 15a1 adjusts the driving amount of the source material pump 11a1 so that the driving amount of the source material pump 11a1 is maintained to that of when the abnormality is determined from when the first abnormality determination portion 15f determines that at least one of the abnormality of the sensor and the communication abnormality occurs. Specifically, in a case where the abnormality of the sensor or the communication abnormality of the first flow sensor 11a2 (the target flow sensor) occurs, the first driving amount adjustment portion 15a1 stops the feedback control controlled by the first driving amount control portion 15a from when the abnormality is determined, and adjusts the first control command value S1 outputted to the source material pump 11a1 to the first control command value S1 corresponding to the driving amount of the source material pump 11a1 at the time point when the abnormality is determined.

The second driving amount adjustment portion 15b1 adjusts the driving amount of the cathode air blower 11c1 so that the driving amount of the cathode air blower 11c1 is maintained to that of when the abnormality is determined from when the second abnormality determination portion 15g determines that at least one of the abnormality of the sensor and the communication abnormality occurs. Specifically, in a case where the abnormality of the sensor or the communication abnormality of the second flow sensor 11c2 (the target flow sensor) occurs, the second driving amount adjustment portion 15b1 stops the feedback control controlled by the second driving amount control portion 15b from when the abnormality is determined, and adjusts the second control command value S2 outputted to the cathode air blower 11c1 to the second control command value S2 corresponding to the driving amount of the cathode air blower 11c1 at the time point when the abnormality is determined.

Defining the source material pump 11a1 and the cathode air blower 11c1 sending the fluid including the flow amount that is detected by the target flow sensor as target pumps, the first and second driving amount adjustment portion 15a1, 15b1 adjusts the driving amount of the target pump so as to maintain the driving amount of the target pump to that of when the abnormality is determined from when the first and second abnormality determination portion 15f, 15g determines that at least one of the abnormality of the sensor and the communication abnormality occurs.

The first and second driving amount adjustment portion 15a1, 15b1 maintains the driving amount of the target pump to that of when the abnormality is determined until a time point of the normal reset, that is, until a time point when the normal reset determination portion 15i determines that the target flow sensor, and the communication between the target flow sensor and the control device 15, are normally reset. The first and second driving amount adjustment portion 15a1, 15b1 releases the stoppage of the feedback control controlled by the first and second driving amount adjustment portion 15a, 15b from the time point of the normal reset. Accordingly, the target pump operates the feedback control from the time point of the normal reset. The first and second driving amount adjustment portion 15a1, 15b1 corresponds to a driving amount adjustment portion of the disclosure.

The electric power generation adjustment portion 15c1 adjusts the generated electric power W of the fuel cell 34, from when the abnormality is determined, so as to maintain the generated power W of the fuel cell 34 to that of when the abnormality is determined. In particular, the electric power generation adjustment portion 15c1 adjusts the target generated electric power Wt of the fuel cell 34 to that of when the abnormality is determined, from when the abnormality is determined to when the normality is reset, regardless of the generated electric power detected from the power detection sensor 13a. The target generated electric power Wt of the fuel cell 34 is set in response to the generated electric power generated by the electric power converter 13 from when the normality is reset.

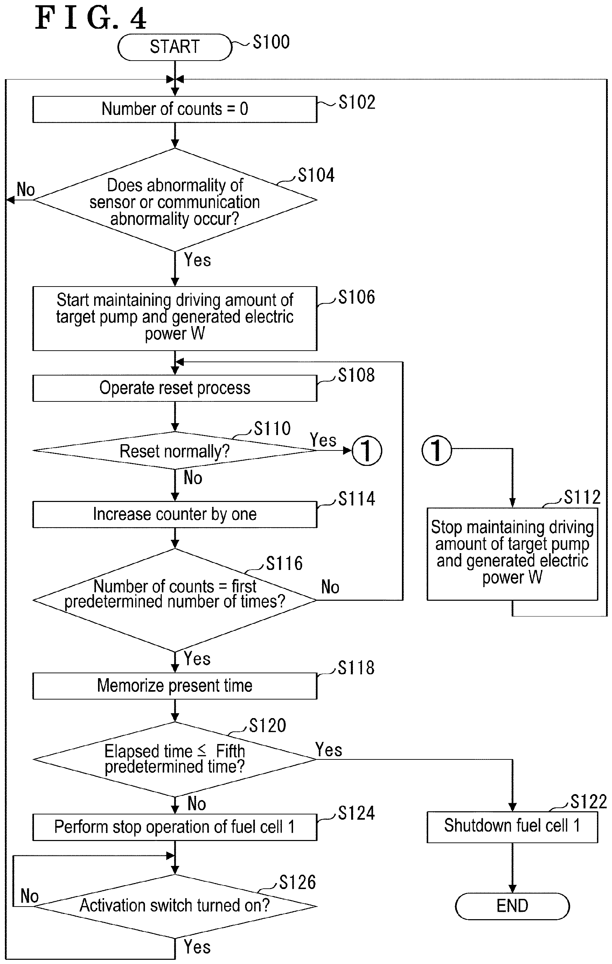

Next, the reset process of the control device 15 in the fuel cell system 1 will be explained with reference to a flowchart shown in Fig. 4. The reset process is operated when the fuel cell system 1 activates, generates power and stops operating. Hereinafter, the abnormality of the first flow sensor 11a2 occurring when the fuel cell system 1 generates electric power will be explained.

The control device 15 sets the number of counts to zero in Step S102. The number of counts corresponds to a number of times of the reset process is performed. The control device 15 (the first and second abnormality determination portion 15f, 15g) determines whether the abnormality of the sensor or the communication abnormality occurs in Step S104. In a case where the abnormality of the sensor or the communication abnormality does not occur, the output value of the first and second flow sensor 11a2, 11c2 varies within a predetermined range. In this case, the control device 15 determines that the abnormality of the sensor or the communication abnormality does not occur in Step S104 (NO in Step S104), and repeatedly performs Step S102 and Step S104. On the other hand, when the abnormality occurs at the first flow sensor 11a2, the output value of the first flow sensor 11a2 has been a constant value for the first time T1. In this case, the control device 15 determines that the abnormality of the sensor or the communication abnormality occurs in Step S104 (YES in Step S104) and proceeds to Step S106.

The control device 15 starts maintaining the driving amount of the target pump and the generated electric power W in Step S106. Because the abnormality occurs at the first flow sensor 11a2, the first flow sensor 11a2 corresponds to the target flow sensor and the source material pump 11a1 corresponds to the target pump. Thus, the control device 15 (the first driving amount adjustment portion 15a1) maintains the driving amount of the source material pump 11a1, from when the abnormality is determined, to that of when the abnormality is determined. The control device 15 (the electric power generation adjustment portion 15c1) maintains the generated electric power W of the fuel cell 34, from when the abnormality is determined, to that of when the abnormality is determined. Furthermore, the control device 15 (the reset process portion 15h) operates the reset process in Step S108.

Then, the control device 15 (the normal reset determination portion 15i) determines whether the target flow sensor (the first flow sensor 11a2) and the communication between the target flow sensor and the control device 15 normally reset or recover in Step S110. When the first flow sensor 11a2 is normally reset by the reset process, the output value of the first flow sensor 11a2 has continuously varied within the predetermined range for the third time T3. In this case, the control device 15 determines that the first flow sensor 11a2 and the communication between the target flow sensor and the control device 15 are normally reset (YES in Step S110), stops the maintenances of the driving amount of the target pump (the source material pump 11a1) and of the generated electric power W in Step S112 (the first driving amount adjustment portion 15a1, the electric power generation adjustment portion 15c1), and returns to Step S102.

On the other hand, in a case where the first flow sensor 11a2 is not normally reset even by the reset process, the output value of the first flow sensor 11a2 is maintained in the constant value. When determining that the first flow sensor 11a2 is not normally reset (NO in Step 110), the control device 15 increases the counter by one in Step S114. The counter is supposed to count the number of counts. Then, the control device 15 determines whether the number of counts is a first predetermined number of times (for example, five) in Step S116. In a case where the number of counts is not the first predetermined number of times, the control device 15 determines that the number of counts is not the first predetermined number of times (NO in Step S116), and returns to Step S108. In a case where the number of counts comes to be the first predetermined number of times without resetting the first flow sensor 11a2 to the normal state, the control device 15 determines that the number of counts comes to be the first predetermined number of times (YES in Step S116), and proceeds to Step S118. As such, the control device 15 operates the reset process until the number of counts comes to be the first predetermined number of times when the target flow sensor and the communication between the target flow sensor and the control device 15 do not return to the normal state.

The control device 15 memorizes a present time in Step S118 (the memory portion), and determines whether an elapsed time is equal to or shorter than a fifth time (for example, 48 hours) in Step S120. The present time is a time when the reset process is operated for this first predetermined number of times. The elapsed time is a time from a time when the reset process has been performed for the first previous predetermined number of times to the present time. In a case where the abnormality of the first flow sensor 11a2 does not occur temporarily, the frequency of the reset process that is performed only for the first predetermined number of times comes to be comparatively high. As a result, when the elapsed time is equal to or shorter than the fifth time, the control device 15 determines that the elapsed time is equal to or shorter than the fifth predetermined time (YES in Step S120). The control device 15 then shuts down the fuel cell system 1 in Step S122. The shutdown is a stop method of the fuel cell system 1 stopping (powering-off) the fuel cell system 1 immediately without performing the stop operation.

On the other hand, in a case where the abnormality of the first flow sensor 11a2 occurs temporarily, the frequency of the reset process that is performed only for the first predetermined number of times comes to be comparatively low. As a result, when the elapsed time is longer than the fifth time, the control device 15 determines that the elapsed time is not equal to or shorter than the fifth time (NO in Step S120), and performs the stop operation of the fuel cell system 1 in Step S124. The first and second flow sensor 11a2, 11c2 may be examined when the fuel cell system 1 is in a standby mode after performing the stop operation. The control device 15 then determines whether the activation switch is turned on in Step S126. In a case where the activation switch is not turned on, the control device 15 determines that the activation switch is not turned on (NO in Step S126) and repeatedly performs Step S126. On the other hand, when the activation switch is turned on after the examination of the first flow sensor 11a2, 11c2, the control device 15 determines that the activation switch is turned on (YES in Step S126), and returns to Step S102. When the activation switch is turned on, the active operation of the fuel cell system 1 starts, and the power generating operation starts after the active operation.

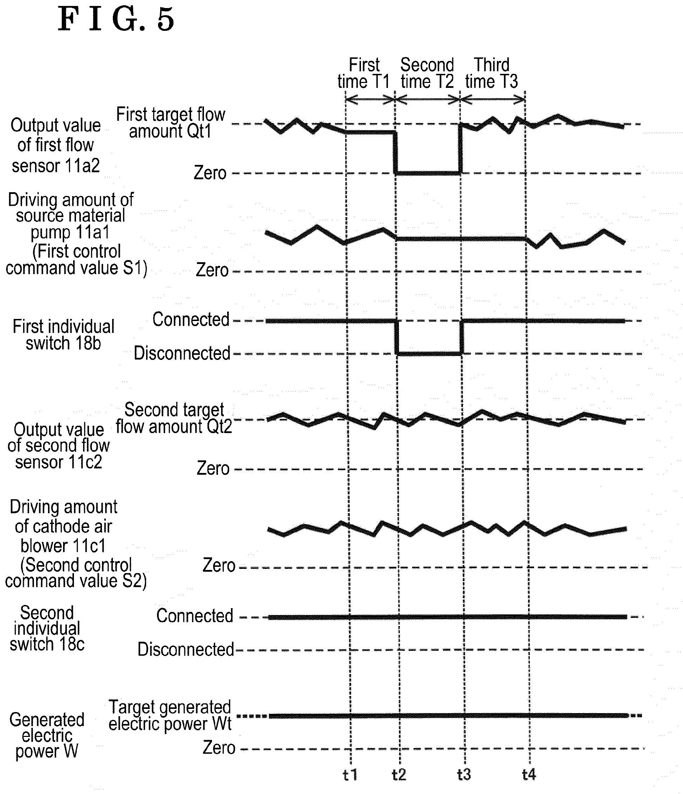

Next, the operation of the fuel cell system 1, the operation that is performed along the flow chart, will be explained with reference to a time chart. When the target generated electric power Wt has been a constant value and the abnormality occurs at the first flow sensor 11a2 when the active operation of the fuel cell system 1 is performed will be explained with a time chart in Fig. 5.

The generated electric power W of the fuel cell 34 is controlled to be the target generated electric power Wt (The generated electric power W and the target generated electric power Wt are consistent with each other in Fig. 5). In a case where the target generated electric power Wt is the constant value, a target flow amount Qt1, Qt2 comes to be a constant value (the target flow amount setting portion 15d, 15e). Because the source material pump 11a1 and the cathode air blower 11c1 are feedback controlled (the first and second driving amount adjustment portion 15a, 15b) so that the output value of the first and second flow sensor 11a2, 11c2 comes to be the target flow amount Qt1, Qt2, the control command value S1, S2 and the driving amounts of the source material pump 11a1 and of the cathode air blower 11c1 vary. Because the actual flow amounts of the source material for reforming and of the cathode air vary, the output value of the first and second flow sensor 11a2, 11c2 varies. In a case where the auxiliary devices do not have abnormality, the output value of the first and second flow sensor 11a2, 11c2 varies within the predetermined range.

When the abnormality occurs at the first flow sensor 11a2, the output value of the first flow sensor 11a2 comes to be a constant value from when the abnormality occurs (at a time t1). When the output value of the first flow sensor 11a2 has been continuously the constant value for the first time t1 (at a time t2), the first abnormality determination portion 15f determines that the abnormality occurs in Step S104. Here (the time t2, when the abnormality is determined), because the first flow sensor 11a2 corresponds to the target flow sensor, and the source material pump 11a1 corresponds to the target pump, the first driving amount adjustment portion 15a1 starts maintaining the driving amount of the source material pump 11a1 in Step S106. That is, because the first control command value S1 is maintained to that of when the abnormality is determined (at the time t2), the driving amount of the source material pump 11a1 is maintained to that of when the abnormality is determined (at the time t2). At this time (the time t2), because the first individual switch 18b corresponds to a target switch, the reset process portion 15h operates the reset process against the first individual switch 18b in Step S108. In particular, the first individual switch 18b is disconnected and is reconnected (at a time t3) after the second time T2 from when the reset process is performed (at the time t2).

When the first flow sensor 11a2 resets normally by the reset process, the output value of the first flow sensor 11a2 varies within the predetermined range. When the output value of the first flow sensor 11a2 has been continuously varied within the predetermine range (at a time t4) for the third time T3, the normal reset determination portion 15i determines that the first flow sensor 11a2 is reset normally in Step S110. Because the first driving amount adjustment portion 15a1 stops the maintenance of the driving amount of the source material pump 11a1 at the time point of the normal reset (at the time t4) in Step S112, the first driving amount control portion 15a operates the feedback control to the driving amount of the source material pump 11a1 in response to the output value of the first flow sensor 11a2. Accordingly, the first control command value S1 and the driving amount of the source material pump 11a1 vary.

On the other hand, when the first flow sensor 11a2 does not reset normally by the reset process, the output amount of the first flow sensor 11a2 is maintained in the constant value. In this case, the reset process is reoperated. Because the abnormality of the sensor does not occur at the second flow sensor 11c2, the reset process operation 15h does not operate reset process against the second individual switch 18c. In this case, the output amount of the second flow sensor 11c2 varies within the predetermined range.

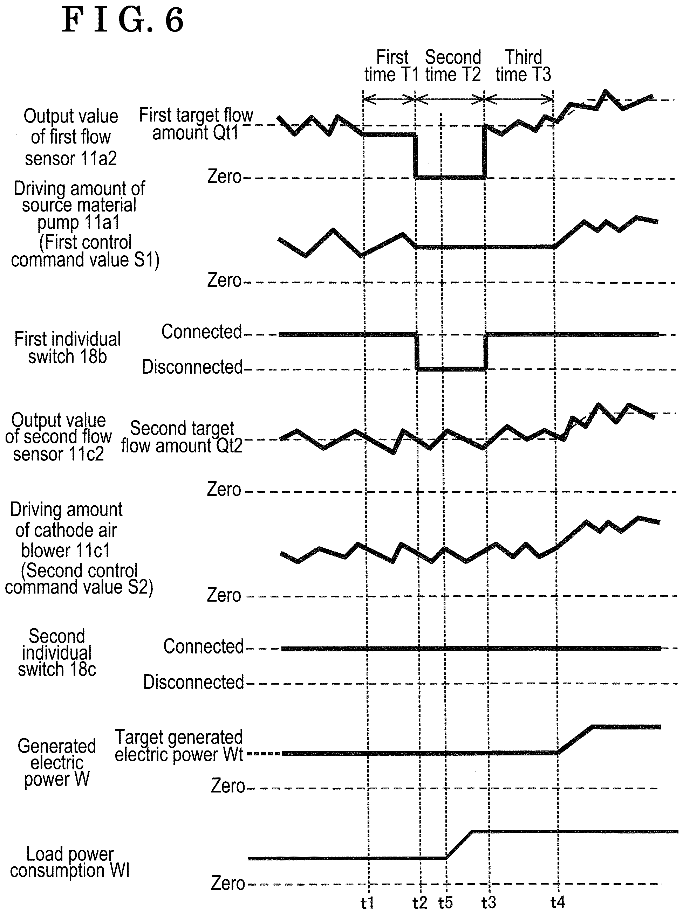

Next, the difference between a case where the abnormality occurs at the first flow sensor 11a2 and the load power consumption Wl increases during the reset process when the fuel cell system 1 generates power, and a case where the abnormality occurs at the first flow sensor 11a2 when the fuel cell system 1 performs active operation will hereunder be explained with reference to a time chart shown in Fig. 6. In this case, the time chart shows the same case as the case where the fuel cell system 1 operates the active operation other than that the load power consumption WI increases during the reset process.

In a case where the abnormality occurs at the first flow sensor 11a2, the first driving amount adjustment portion 15a1 maintains the driving amount of the source material pump 11a1, from when the abnormality is determined (at the time t2) to the time point of normal reset (at the time t4), to that of when the abnormality is determined, and the electric power generation adjustment portion 15c1 maintains the generated electric power W of the fuel cell 34 to that of when the abnormality is determined. Accordingly, because electric power generation adjustment portion 15c1 maintains the generated electric power W of the fuel cell 34 to that of when the abnormality is determined when the load power consumption WI increases during the reset process (at a time t5), the target flow amount setting portion 15d, 15e maintains the target flow amount Qt1, Qt2 to that of when the abnormality is determined. Thus, the generated electric power W cannot follow the load power consumption WI and is maintained to that of when the abnormality is determined.

Because the maintenance of the driving amount of the source material pump 11a1 and the maintenance of the generated electric power of the fuel cell 34a are stopped at the time point of the normal reset (at the time t4), the target electric power generation setting portion 15c sets the target generated electric power Wt based on the generated electric power detected by the power detection sensor 13a. Accordingly, because the target generated electric power Wt increases so as to be the load power consumption WI, the target flow amount Qt1, Qt2 increases. Because the control command value S1, S2 and the respective driving amounts of the source material pump 11a1 and of the cathode air blower 11c1 increase in response to the increase of the target flow amount Qt1, Qt2, the generated electric power W of the fuel cell 34 follows the load power consumption WI.

The aforementioned embodiment describes an example of the fuel cell system, and other structures of the fuel cell system may be adapted. For example, according to the embodiment, the fuel cell system 1 includes the first and second flow sensors 11a2, 11c2. Alternatively, only one of the first and second flow sensors 11a2, 11c2 may be provided. In a case where only the first flow sensor 11a2 is provided, because the fuel cell system 1 does not include the second flow sensor 11c2, the second individual switch 18c is not provided. In this case, the control device 15 does not include the second driving amount adjustment portion 15b1 and the second abnormality determination portion 15g.

The fuel cell system 1 may include a third flow sensor in addition to the first and second flow sensors 11a2, 11c2, and a third switch (i.e., serving as a switch). The third flow sensor detects the flow amount of the reforming water. The third switch electrically connects and disconnects the third flow sensor and the electric power converter 13. In this case, the third driving amount control portion may perform the feedback control of the driving amount of the reforming water pump 11b1 so that the flow amount detected by the third flow sensor comes to be the third target flow amount. Similarly to the first and second target flow amounts Qt1, Qt2, the third target flow amount is delivered on a basis of a fourth map from the target generated electric power Wt. The fourth map indicates the correlation between the third target flow amount and the target generated electric power Wt.

In this case, the control device 15 may include a third abnormality determination portion determining whether at least one of the abnormality of the sensor and the communication abnormality occurs, the abnormality of the third flow sensor, and the communication abnormality between the third flow sensor and the control device 15, based on the flow amount detected by the third flow sensor. In a case where the third abnormality determination portion determines that the abnormality of the third flow sensor occurs, the reset process portion 15h may perform reset process by identifying that the third flow sensor corresponds to the target flow sensor and that the third switch corresponds to the target switch. As such, the fuel cell system 1 further includes one of the first flow sensor 11a2 detecting the flow amount of the source material for reforming, the second flow sensor 11c2 detecting the flow amount of the cathode gas, and the third flow sensor detecting the flow amount of the reforming water, and one or plural switches electrically connecting and disconnecting each of the first, second and third flow sensors and the electric power converter 13.

In this case, the control device 15 may include a third driving amount adjustment portion adjusting the driving amount of the reforming water pump 11b1 so as to maintain the driving amount of the reforming water pump 11b1 to that of when the abnormality is determined from when the third abnormality determination portion determines at least one of the abnormality of the sensor and the communication abnormality occurs. In this case, the target pump is defined as the source material pump 11a1, the cathode air blower 11c1, and the reforming water pump 11b1 sending the fluid including the flow amount that is detected by the target flow sensor. That is, the driving amount adjustment portion adjusts the driving amount of the target pump, from when the abnormality determination portion determines at least one of the abnormality of the sensor or the communication abnormality occurs, so as to maintain the driving amount of the target pump to that of when the abnormality is determined.

According to the aforementioned embodiment, the control device 15 determines whether the activation switch is turned on in Step S126 after the fuel cell system 1 performs the stop operation in Step S124. Alternatively, the reset process may be performed between Step S124 and Step S126. According to the aforementioned embodiment, the control device 15 (the electric power generation adjustment portion 15c1) adjusts the generated electric power W of the fuel cell 34 so as to maintain the generated electric power W of the fuel cell 34 to that of when the abnormality is determined. Alternatively, the electric power generation adjustment portion 15c1 may not maintain the generated electric power W of the fuel in a case where the fuel cell system 1 is operated so as to maintain the generated electric power W of the fuel cell 34 at the constant value (the constant value operation).

A fuel cell system (1) includes at least one of a first flow sensor (11a2) detecting a flow amount of the source material for reforming and a second flow sensor (11c2) detecting a flow amount of the cathode gas, and at least one of switches (18b, 18c) electrically connecting/disconnecting at least one of the first flow sensor (11a2) and the second flow sensor (11c2) to/from a power supply. The control device (15) includes an abnormality determination portion (15f, 15g) determining whether at least one of an abnormality of a sensor and a communication abnormality occurs, and a reset process portion (15h) operating a reset process reconnecting the switch (18b, 18c) after disconnecting when the abnormality determination portion (15f, 15g) determines that at least one of the abnormality of the sensor and the communication abnormality occurs at the flow sensor (11a2, 11c2).

## Claims

1. A fuel cell system (1), comprising:
a fuel cell (34) configured to be supplied with a fuel and a cathode gas, the fuel cell (34) configured to generate an electric power with the fuel and the cathode gas;
an evaporation portion (32) configured to generate a water vapor from a reforming water supplied from a water tank (14);
a reforming portion (33) configured to generate the fuel with a source material for reforming supplied from a supply source (Gs) and the water vapor supplied from the evaporation portion (32), the reforming portion (33) configured to supply the fuel to the fuel cell (34);
a control device (15) at least configured to control the fuel cell (34);
at least one of a first flow sensor (11a2) configured to detect a flow amount of the source material for reforming and a second flow sensor (11c2) configured to detect a flow amount of the cathode gas; and
at least one of switches (18b, 18c) configured to electrically connect/disconnect at least one of the first flow sensor (11a2) and the second flow sensor (11c2) to/from a power supply; wherein
the control device (15) includes
an abnormality determination portion (15f, 15g) configured to determine whether at least one of an abnormality of a sensor and a communication abnormality occurs on a basis of the flow amount detected by the first flow sensor (11a2) and the second flow sensor (11c2), wherein the abnormality of the sensor serves as an abnormality of each of the first and second flow sensors (11a2, 11c2), the communication abnormality serves as a communication abnormality between the first flow sensor (11a2) and the control device (15), and between the second flow sensor (11c2) and the control device (15); and
a reset process portion (15h); and wherein
each of the first flow sensor (11a2) and the second flow sensor (11c2) is configured to cause at least one of the abnormality of the sensor and the communication abnormality as a target flow sensor (11a2, 11c2), each of the switches (18b, 18c) is configured to electrically connect/disconnect the target flow sensor (11a2, 11c2) to/from the power supply as a target switch (18b, 18c), and the reset process portion (15h) is configured to operate a reset process reconnecting the target switch (18b, 18c) after disconnecting when the abnormality determination portion (15f, 15g) determines that at least one of the abnormality of the sensor and the communication abnormality occurs at the target flow sensor (11a2, 11c2),
**characterized in that**
the control device (15) further includes a normal reset determination portion (15i); and
after the reset process portion (15h) operates the reset process, the normal reset determination portion (15i) is configured to determine whether the target flow sensor (11a2, 11c2), and the communication between the target flow sensor (11a2, 11c2) and the control device (15) are normally reset based on the flow amount detected by the target flow sensor (11a2, 11c2).

2. The fuel cell system (1) according to claim 1, further comprising:
a first pump (11a1) configured to send the source material for reforming; and
a second pump (11c1) configured to send the cathode gas; wherein
the control device (15) includes a driving amount adjustment portion (15a1, 15b1),
each of the first pump (11a1) and the second pump (11c1) is configured to send a fluid including the flow amount that is detected by the target flow sensor (11a2, 11c2) as a target pump (11a1, 11c1), and
the driving amount adjustment portion (15b1) is configured to adjust a driving amount of the target pump (11a1, 11c1) so as to maintain the driving amount of the target pump (11a1, 11c1) to that of when the abnormality is determined from when the abnormality determination portion (15f, 15g) determines that at least one of the abnormality of the sensor and the communication abnormality occurs at the target flow sensor (11a2, 11c2).

3. The fuel cell system (1) according to claim 2, wherein
the control device (15) further includes an electric power generation adjustment portion (15c1) configured to adjust a generated power of the fuel cell (34), from when the abnormality is determined, so as to maintain the generated power of the fuel cell (34) to that of when the abnormality is determined.

## Patentansprüche

1. Brennstoffzellensystem (1), mit:
einer Brennstoffzelle (34), die dazu eingerichtet ist, mit einem Brennstoff und einem Kathodengas versorgt zu werden, wobei die Brennstoffzelle (34) dazu eingerichtet ist, aus dem Brennstoff und dem Kathodengas elektrische Energie zu erzeugen;
einem Verdampfungsabschnitt (32), der dazu eingerichtet ist, einen Wasserdampf aus einem Reformwasser zu erzeugen, das aus einem Wassertank (14) zugeführt wird;
einem Reformabschnitt (33), der zur Erzeugung des Brennstoffs aus einem aus einer Zufuhrquelle (Gs) zugeführten Ausgangsmaterial zum Reformieren und dem von dem Verdampfungsabschnitt (32) zugeführten Wasserdampf eingerichtet ist, wobei der Reformabschnitt (33) zur Zufuhr des Brennstoffs an die Brennstoffzelle (34) eingerichtet ist;
einer Steuervorrichtung (15), die zumindest zur Steuerung der Brennstoffzelle (34) eingerichtet ist;
einem ersten Flusssensor (11a2), der dazu eingerichtet ist, eine Flussmenge des Ausgangsmaterials zum Reformieren zu erfassen, und/oder einem zweiten Flusssensor (11c2), der dazu eingerichtet ist, eine Flussmenge des Kathodengases zu erfassen; und
zumindest einem Umschalter (18b, 18c), der dazu eingerichtet ist, den ersten Flusssensor (11a2) und/oder den zweiten Flusssensor (11c2) zu/von einer Energiezufuhr zu verbinden/zu trennen; wobei
die Steuervorrichtung (15) umfasst:
einen Anomaliebestimmungsabschnitt (15f, 15g), der dazu eingerichtet ist, auf der Grundlage der durch den ersten Flusssensor (11a2) und den zweiten Flusssensor (11c2) erfassten Flussmenge zu bestimmen, ob eine Anomalie eines Sensors und/oder eine Kommunikationsanomalie auftritt oder nicht, wobei die Anomalie des Sensors als eine Anomalie sowohl des ersten als auch des zweiten Flusssensors (11a2, 11c2) dient und die Kommunikationsanomalie als eine Kommunikationsanomalie zwischen dem ersten Flusssensor (11a2) und der Steuervorrichtung (15), sowie zwischen dem zweiten Flusssensor (11c2) und der Steuervorrichtung (15) dient; und
einen Rücksetzungsverarbeitungsabschnitt (15h); und wobei
sowohl der erste Flusssensor (11a2) als auch der zweite Flusssensor (11c2) als einem Zielflusssensor (11a2, 11c2) dazu eingerichtet sind, zumindest die Anomalie des Sensors oder die Kommunikationsanomalie zu bewirken, sowie jeder der Umschalter (18b, 18c) als ein Zielumschalter (18b, 18c) dazu eingerichtet ist, den Zielflusssensor (11a2, 11c2) elektrisch zu/von der Energiezufuhr zu verbinden/zu trennen,
und der Rücksetzungsverarbeitungsabschnitt (15h) dazu eingerichtet ist, eine Rücksetzungsverarbeitung durchzuführen, die den Zielumschalter (18b, 18c) nach einer Trennung wiederverbindet, falls der Anomaliebestimmungsabschnitt (15f, 15g) bestimmt, dass zumindest die Anomalie des Sensors oder die Kommunikationsanomalie an dem Zielflusssensor (11a2, 11c2) auftritt,
**dadurch gekennzeichnet, dass**
die Steuervorrichtung (15) ferner einen Normalrücksetzungsbestimmungsabschnitt (15i) umfasst; und
nachdem der Rücksetzungsverarbeitungsabschnitt (15h) die Rücksetzungsverarbeitung durchgeführt hat, der Normalrücksetzungsbestimmungsabschnitt (15i) dazu eingerichtet ist, auf der Grundlage der von dem Zielflusssensor (11a2, 11c2) erfassten Flussmenge zu bestimmen, ob der Zielflusssensor (11a2, 11c2) sowie die Kommunikation zwischen dem Zielflusssensor (11a2, 11c2) und der Steuervorrichtung (15) normal zurückgesetzt sind.

2. Brennstoffzellensystem (1) nach Anspruch 1, ferner mit:
einer ersten Pumpe (11a1), die dazu eingerichtet ist, das Ausgangsmaterial zum Reformieren zu befördern; und
einer zweiten Pumpe (11c1), die dazu eingerichtet ist, das Kathodengas zu befördern; wobei
die Steuervorrichtung (15) einen Antriebsmengeneinstellabschnitt (15a1, 15b1) umfasst,
sowohl die erste Pumpe (11a1) als auch die zweite Pumpe (11c1) als einer Zielpumpe (11a1, 11c1) dazu eingerichtet sind, ein Fluid mit der Durchflussmenge zu befördern, die von dem Zielflusssensor (11a2, 11c2) erfasst ist, und
der Antriebsmengeneinstellabschnitt (15b1) dazu eingerichtet ist, eine Antriebsmenge der Zielpumpe (11a1, 11c1) derart einzustellen, dass die Antriebsmenge der Zielpumpe (11a1, 11c1) ab der Bestimmung durch den Anomaliebestimmungsabschnitt (15f, 15g), dass die Anomalie des Sensors und/oder die Kommunikationsanomalie bei dem Zielflusssensor (11a2, 11c2) auftritt, bis zur Bestimmung der Anomalie erhalten ist.

3. Brennstoffzellensystem (1) nach Anspruch 2, wobei
die Steuervorrichtung (15) ferner einen Einstellabschnitt (15c1) einer elektrischen Energieerzeugung umfasst, der dazu eingerichtet ist, eine elektrische Energieerzeugung der Brennstoffzelle (34) einzustellen, ab der Bestimmung der Anomalie, sodass die erzeugte Leistung der Brennstoffzelle (34) erhalten ist, bis zu der Bestimmung der Anomalie.

## Revendications

1. Système de pile à combustible (1), qui comprend :
une pile à combustible (34) configurée pour recevoir un combustible et un gaz de cathode, dans lequel la pile à combustible (34) est configurée pour générer une énergie électrique avec le combustible et le gaz de cathode ;
une partie d'évaporation (32) configurée pour générer une vapeur d'eau à partir d'une eau de reformage fournie à partir d'un réservoir d'eau (14) ;
une partie de reformage (33) configurée pour générer le combustible avec un matériau de source pour le reformage fourni à partir d'une source d'alimentation (Gs) et la vapeur d'eau fournie à partir de la partie d'évaporation (32), dans lequel la partie de reformage (33) est configurée pour fournir le combustible à la pile à combustible (34) ;
un dispositif de commande (15) au moins configuré pour commander la pile à combustible (34) ;
au moins l'un d'un premier capteur d'écoulement (11a2) configuré pour détecter une quantité d'écoulement du matériau de source pour le reformage et d'un deuxième capteur d'écoulement (11c2) configuré pour détecter une quantité d'écoulement du gaz de cathode ; et
au moins l'un de commutateurs (18b, 18c) configuré pour connecter/déconnecter électriquement au moins l'un du premier capteur d'écoulement (11a2) et du deuxième capteur d'écoulement (11c2) à/d'une alimentation ; dans lequel
le dispositif de commande (15) comprend
une partie de détermination d'anomalie (15f, 15g) configurée pour déterminer si au moins l'une d'une anomalie d'un capteur et d'une anomalie de communication se produit sur la base de la quantité d'écoulement détectée par le premier capteur d'écoulement (11a2) et le deuxième capteur d'écoulement (11c2), dans lequel l'anomalie du capteur sert en tant qu'anomalie de chacun des premier et deuxième capteurs d'écoulement (11a2, 11c2), l'anomalie de communication sert en tant qu'anomalie de communication entre le premier capteur d'écoulement (11a2) et le dispositif de commande (15), et entre le deuxième capteur d'écoulement (11c2) et le dispositif de commande (15) ; et
une partie de processus de réinitialisation (15h) ; et dans lequel
chacun du premier capteur d'écoulement (11a2) et du deuxième capteur d'écoulement (11c2) est configuré pour provoquer au moins l'une de l'anomalie du capteur et de l'anomalie de communication en tant que capteur d'écoulement cible (11a2, 11c2), chacun des commutateurs (18b, 18c) est configuré pour connecter/déconnecter électriquement le capteur d'écoulement cible (11a2, 11c2) à/de l'alimentation en tant que commutateur cible (18b, 18c), et la partie de processus de réinitialisation (15h) est configurée pour effectuer un processus de réinitialisation qui reconnecte le commutateur cible (18b, 18c) après une déconnexion lorsque la partie de détermination d'anomalie (15f, 15g) détermine qu'au moins l'une de l'anomalie du capteur et de l'anomalie de communication se produit au niveau du capteur d'écoulement cible (11a2, 11c2),
**caractérisé en ce que**
le dispositif de commande (15) comprend en outre une partie de détermination de réinitialisation normale (15i) ; et
après que la partie de processus de réinitialisation (15h) a effectué le processus de réinitialisation, la partie de détermination de réinitialisation normale (15i) est configurée pour déterminer si le capteur d'écoulement cible (11a2, 11c2), et la communication entre le capteur d'écoulement cible (11a2, 11c2) et le dispositif de commande (15) sont réinitialisés normalement sur la base de la quantité d'écoulement détectée par le capteur d'écoulement cible (11a2, 11c2) .

2. Système de pile à combustible (1) selon la revendication 1, qui comprend en outre :
une première pompe (11a1) configurée pour envoyer le matériau de source pour le reformage ; et
une deuxième pompe (11c1) configurée pour envoyer le gaz de cathode ; dans lequel
le dispositif de commande (15) comprend une partie d'ajustement de quantité de commande (15a1, 15b1),
chacune de la première pompe (11a1) et de la deuxième pompe (11c1) est configurée pour envoyer un fluide qui comprend la quantité d'écoulement qui est détectée par le capteur d'écoulement cible (11a2, 11c2) en tant que pompe cible (11a1, 11c1), et
la partie d'ajustement de quantité de commande (15b1) est configurée pour ajuster une quantité de commande de la pompe cible (11a1, 11c1) de manière à maintenir la quantité de commande de la pompe cible (11a1, 11c1) à celle lorsque l'anomalie est déterminée à partir de l'instant auquel la partie de détermination d'anomalie (15f, 15g) détermine qu'au moins l'une de l'anomalie du capteur et de l'anomalie de communication se produit au niveau du capteur d'écoulement cible (11a2, 11c2).

3. Système de pile à combustible (1) selon la revendication 2, dans lequel
le dispositif de commande (15) comprend en outre une partie d'ajustement de génération d'énergie électrique (15c1) configurée pour ajuster une énergie générée de la pile à combustible (34), à partir de l'instant auquel l'anomalie est déterminée, de manière à maintenir l'énergie générée de la pile à combustible (34) à celle lorsque l'anomalie est déterminée.
